# EUROPÄISCHE PATENTSCHRIFT

(11) **EP 1 194 321 B1**
(45) Veröffentlichungstag und Bekanntmachung des Hinweises auf die Patenterteilung: **18.06.2003**
(21) Anmeldenummer: 00942108.2
(22) Anmeldetag: 21.06.2000
(51) Int. Cl.: B60T 8/36, F15B 1/04

(54) **HYDRAULIKAGGREGAT**
HYDRAULIC AGGREGATE
GROUPE HYDRAULIQUE

(30) Priorität: 29.06.1999 DE 19929581; 02.12.1999 DE 19958194
(43) Veröffentlichungstag der Anmeldung: 10.04.2002
(73) Patentinhaber: Continental Teves AG & Co. oHG, 60488 Frankfurt (DE)
(72) Erfinder: DINKEL, Dieter, D-65824 Schalbach (DE); HINZ, Axel, D-61267 Neu-Anspach (DE); REINARTZ, Hans-Dieter, D-60439 Frankfurt am Main (DE); VOGEL, Günther, D-63303 Dreieich (DE)
(86) Internationale Anmeldenummer: EP0005697
(87) Internationale Veröffentlichungsnummer: WO01000471

(56) Entgegenhaltungen:
- EP-A- 0 687 814
- WO-A-91/16220
- WO-A-94/27045
- WO-A-97/18113
- DE-A- 3 907 969
- DE-A- 4 107 979
- DE-A- 19 732 771
- DE-A- 19 808 626
- US-A- 5 538 335
- PATENT ABSTRACTS OF JAPAN vol. 1998, no. 06, 30. April 1998 (1998-04-30) -& JP 10 047256 A (UNISIA JECS CORP), 17. Februar 1998 (1998-02-17)

## Beschreibung

Die Erfindung betrifft ein Hydraulikaggregat für eine schlupfgeregelte Bremsanlage nach dem Oberbegriff des Patentanspruchs 1.

Ein Hydraulikaggregat ist bereits aus der WO 91/16220 bekannt. Darin wird vorgeschlagen, die Geräuschdampfungskammern parallel zu den Niederdruckspeicherbohrungen anzuordnen, die somit gemeinsam in einer Reihe seitlich zu einer Pumpenbohrung ausgerichtet sind. Die Druckmittelkanäle für die Bremsdruckgeberanschlüsse am blockförmigen Aufnahmekörper durchqueren die für die Einlaßventile vorgesehenen Ventilaufnahmebohrungen vertikal und verlaufen seitlich an der Pumpenbohrung vorbei in den Bodenbereich der Geräuschdämpfungskammern. Parallel zu jedem in die Geräuschdämpfungskammer einmündenden Druckmittelkanal verläuft für jeden Bremskreis ein weiterer, vertikaler Druckmittelkanal, der ausschließlich die Pumpenbohrung mit der Geräuschdämpfungskammer verbindet.

Dies führt zwangsläufig zu einer überquadratischen Blockbauweise, d.h. mit erheblich unterschiedlichen Kantenlängen, um die notwendigen Geräuschdämpfungskammern und die Niederdruckspeicherbohrungen realisieren zu können. Andererseits muß ein erhebliches Zerspanungsvolumen mittels einer Vielzahl unterschiedlicher Bohroperationen aus verschiedenen Richtungen am Block abgetragen werden. Folglich bedarf es aufwendiger Maßnahmen, insbesondere zur Herstellung der Geräuschdämpfungskammern und der erforderlichen Druckmittelkanäle. Ferner wird durch die gewählte Aufteilung der Ventilreihen eine Aufteilung der Radbremsanschlüsse auf beide Seitenflächen des blockförmigen Aufnahmekörper erforderlich, so daß sich ein auf drei Seitenflächen des Aufnahmekörpers verteiltes Anschlußbild für das Rohrleitungssystem ergibt. Dies erfordert wiederum einen erhöhten Platzbedarf und die notwendigen Montageschritte nehmen zu.

Aus der gattungsbildenden Druckschrift WO 97/18113 ist bereits ein Hydraulikaggregat bekannt, dessen Geräuschdämpfungskammer parallel zu einer Pumpenbohrung auf der gleichen Höhe oberhalb zweier Ventilreihen in einem blockförmigen Gehäuse angeordnet ist, in die ein Saugkanal radial einmündet, der mit einer Niederdruckspeicherbohrung verbunden ist. Durch die gewählte Parallelanordnung ist zwischen der Pumpenbohrung und der Geräuschdämpfungskammer ein Druckkanal angeordnet, der zur einfachen Verbohrung des Gehäuses koaxial zum Saugkanal angeordnet ist, so daß aus der Richtung der Niederdruckspeicherbohrung nacheinander das Saug- und Druckventil in den Saug- und Druckkanal eingefügt sind. Der erforderliche Aufwand zur Herstellung des Saug- und Druckkanals wird ebenso wie der Montageaufwand für das Saug- und Druckventil durch den Abstand der Niederdruckspeicherbohrung von der Pumpenbohrung und durch den Abstand der Geräuschdämpfungskammer von der Pumpenbohrung bestimmt.

In der DE 197 32 771 A1 ist eine Kolbenpumpe beschrieben, die koaxial zur Pumpenbohrung einen mit Geräuschdämpfungsmaßnahmen versehenen Abströmraum aufweist. Das Pumpensaugals auch Pumpendruckventil sind in der Pumpenbohrung integriert, in die seitlich ein Einlaß- und Auslaßkanal einmündet. Durch einen von außen in den Abstömraum eingefügten Verschlußkörper ist sowohl der Abströmraum als auch die Pumpenbohrung nach außen druckmitteldicht verschlossen.

Daher ist es die Aufgabe der Erfindung, ein Hydraulikaggregat der angegebenen Art möglichst kleinbauend und kostengünstig herzustellen. Es soll eine Bohrungsanordnung geschaffen werden, die auf kürzestem Weg hydraulische als auch elektrische Verbindungen, u.a. zwischen dem in die Pumpenmotoraufnahmebohrung einzusetzenden Elektromotor und einem am Aufnahmekörper zu befestigenden Ventilsteuergerät, ermöglicht. Insbesondere soll der Herstellaufwand zum Anschluß der Pumpenbohrung an die Niederdruckspeicherbohrungen und zu den Geräuschdämpfungskammern reduziert werden.

Diese Aufgabe wird für ein Hydraulikaggregat der angegebenen Art mit den kennzeichnenden Merkmalen des Anspruchs 1 gelöst.

Weitere Merkmale, Vorteile und Anwendungsmöglichkeiten der Erfindung werden im nachfolgenden anhand der Beschreibung mehrerer Ausführungsbeispiele erläutert.

Es zeigen:
- Fig. 1a: eine Perspektivdarstellung einer Gehäuseverbohrung unter Verwendung von ausschließlich lotrecht in den quadratischen Aufnahmekörper eines Hydraulikaggregats einmündenden Druckmittelkanälen,
- Fig. 1b: eine Schnittdarstellung durch den Aufnahmekörper nach Figur 1a in der Ebene der Pumpenbohrung,
- Fig. 2: eine Perspektivdarstellung einer weiteren Ausführungsform für ein Hydraulikaggregat mit sowohl lotrecht als auch schräg in den blockförmigen Aufnahmekörper einmündenden Druckmittelkanälen,
- Fig. 3: eine Perspektivdarstellung für ein blockförmiges Hydraulikaggregat mit einem gegenüber den Fig. 1 und 2 geänderten Anschlußbild für die Bremsdruckgeber- und Radbremsanschlüsse.

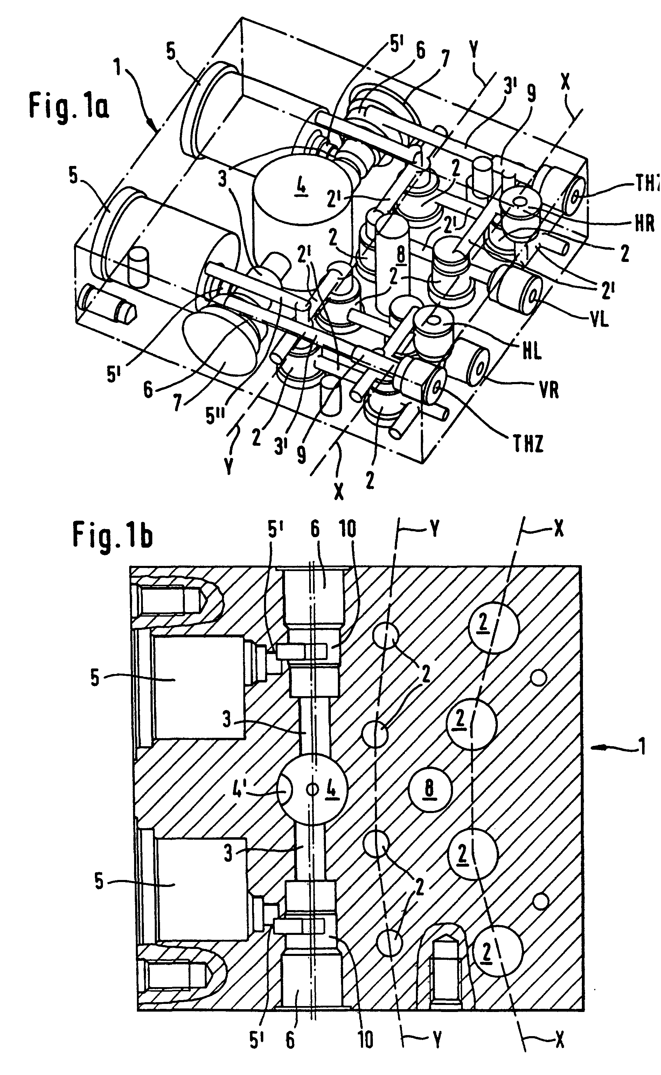

Die Fig. 1a zeigt ein Hydraulikaggregat für eine schlupfgeregelte Bremsanlage, mit einem blockförmigen Aufnahmekörper 1, der in mehreren Ventilaufnahmebohrungen 2 einer ersten und zweiten Ventilreihe X, Y Ein- und Auslaßventile aufnimmt und der außerhalb zu den beiden Ventilreihen X, Y eine Pumpenbohrung 3 aufweist, die quer zur Einmündungsrichtung der Ventilaufnahmebohrung 2 in den Aufnahmekörper 1 gerichtet ist. Außerhalb zu den beiden Ventilreihen X, Y ist ferner eine Motoraufnahmebohrung 4 angeordnet, die senkrecht zwischen der halben Bohrungslänge in die Pumpenbohrung 3 einmündet. Außerhalb zu den beiden Ventilreihen X, Y sind außerdem in dem Aufnahmekörper 1 Niederdruckspeicherbohrungen 5 angeordnet, die senkrecht zu den Symmetrieachsen der Ventilaufnahmebohrungen 2 und senkrecht zu der Längsachse der Pumpenbohrung 3 in den Aufnahmekörper 1 gerichtet sind. Mehrere die Ventilaufnahmebohrungen 2, Pumpen- und Niederdruckspeicherbohrungen 3, 5 verbindende Druckmittelkanäle 2', 3', 5' sorgen für eine hydraulische Verbindung zwischen zwei in dem Aufnahmekörper 1 eingefügte Bremsdruckgeberanschlüsse THZ und den vier Radbremsanschlüssen HR, HL, VR, VL. Ferner sind in die Pumpenbohrung 3 zwei hohlzylinderförmige Geräuschdämpfungskammern 6 eingebracht, die unmittelbar über die quer zur Pumpenachse verlaufenden Druckmittelkanäle 3' mit den zwei in den Aufnahmekörper 1 einmündenden Bremsdruckgeberanschlüssen THZ verbunden sind. Erfindungsgemäß sind somit die Geräuschdämpfungskammern 6 in der Pumpenbohrung 3 integriert und die Bremsdruckgeberanschlüsse THZ stehen mit den Geräuschdämpfungskammern 6 über radial, vorzugsweise tangential stromabwärts zu den Pumpendruckventilen in die Pumpenbohrung 3 einmündenden Druckmittelkanäle 3' in Verbindung. Diese Druckmittelkanäle 3' weisen jeweils eine Abzweigung zu den Ventilaufnahmebohrungen 2 der ersten, die Einlaßventile aufnehmenden Ventilreihe X auf. Die Geräuschdämpfungskammern 6 sind in den diametral gelegenen Enden der Pumpenbohrung 3 angeordnet, so daß vorteilhafterweise mittels von außen in die beiden Seitenflächen des Aufnahmekörpers 1 eingesetzte Verschlußkörper 7 sowohl die Geräuschdämpfungskammern 6 als auch die Pumpenbohrung 3 druckmitteldicht verschlossen sind. Die rechtwinklig zu den Niederdruckspeicherbohrungen 5 den Aufnahmekörper 1 durchquerende Pumpenbohrung 3 weist im Bereich zwischen dem Bohrungsabschnitt, der für die zwei Pumpkolben und der Geräuschdämpfungskammer 6 vorgesehen ist, jeweils auf beiden Seiten der Radialkolbenpumpe einen Stufenabschnitt 30 auf (siehe hierzu explizit die Figur 1b), in den die Pumpensaugkanäle 5' in Richtung der Niederdruckspeicherbohrungen 5 einmünden. Die Pumpensaugkanäle 5' sind besonders platzsparend durch die Kombination einer jeweils in den Boden der Niederdruckspeicherbohrung 5 eingebrachten Aufnahmebohrung für das Pumpensaugventil (Rückschlagventil) und durch einen Fräsvorgang innerhalb der Pumpenbohrung 3 hergestellt. Letzteres geschieht jeweils durch das Einführen eines Umfangsfräsers in die Pumpenbohrung 3, der die Pumpenwand in Richtung der innerhalb jeder Niederdruckspeicherbohrung 5 vorgesehenen Aufnahmebohrung nur geringfügig abtragen muß. Das bisher durch das Bohren in diesem Bereich erforderliche Entgraten der Pumpenbohrung 3 als auch ein bisher aufwendiger Pumpensaugkanalpfad entfällt nunmehr. Vielmehr kann der Pumpenkanal 5' äußerst kurz durch das aus den entgegengelegenen Richtungen Aufeinandertreffen der Aufnahmebohrung für das Pumpensaugventil auf die Einfräsung der Pumpenbohrung 3 verwirklicht werden. Weiterhin ist die Pumpenbohrung 3 beiderseits der Motoraufnahmebohrung 4 mit einem Achsenversatz versehen, um den Oberflächenverschleiß in der Pumpenbohrung 3 infolge der darin betriebenen Kolben einer Radialkolbenpumpe zu minimieren.

Die zweite Ventilreihe Y enthält ausschließlich die für die Auslaßventile vorgesehene Ventilaufnahmebohrungen 2, die optimal zwischen der Pumpenbohrung 3 und der ersten Ventilreihe X, welche ausschließlich die Ventilaufnahmebohrungen 2 für die Einlaßventile aufweist, gelegen ist. Hierdurch ergeben sich besonders kurze, gerade Druckmittelkanäle 2' zwischen den beiden Ventilreihen X, Y und eine äußerst günstige Verbindung zwischen der Ventilreihe Y und den Niederdruckspeicherbohrungen 5 über die Rücklaufkanäle 5'. Der zwischen der Pumpenbohrung 3 und der Niederdruckspeicherbohrung 5 angeordnete Pumpensaugkanal 5' ist durch die bereits erwähnte Blockverbohrung für die einzelnen Aufnahmebohrungen derart kurz und damit extrem platzsparend ausgelegt, daß darin mit geringstem Baubedarf das in Richtung der Niederdruckspeicherbohrung 5 sperrende sowie federbelastetes Rückschlagventil (Pumpensaugventil) optimal plaziert werden kann.

Die gleichfalls zu den Druckmittelkanälen 2' führenden Radbremsanschlüsse HL, HR sind montagegünstig parallel zur Motoraufnahmebohrung 4 an der Oberseite des Aufnahmekörpers 1 angeordnet, so daß mehrere Rohrleitungen unproblematisch neben einem an der Motoraufnahmebohrung 4 anzuflanschenden Motorengehäuse gut zugänglich angeschraubt werden können.

Zwischen den beiden Ventilreihen X, Y befindet sich in zentraler Lage eine weitere Durchgangsöffnung 8 im Aufnahmekörper 1, um einen aus dem Motorengehäuse hervorstehenden elektrischen Stecker auf kürzestem Weg von der Oberseite zur Unterseite des blockförmigen Aufnahmekörpers 1 zu führen, um den Stecker zur elektrischen Kontaktierung an einem an der Unterseite des Aufnahmekörpers 1 befestigten Ventilsteuergerät anzuschließen, das gleichzeitig die Steuerelektronik zum Antrieb des im Motorengehäuse integrierten Elektromotors beinhaltet.

Die Fig. 1a verdeutlicht die Vorzüge der gewählten Blockverbohrung im Aufnahmekörper 1 mittels ausschließlich lotrecht zu den Körperflächen angeordneten Druckmittelkanälen 2', 3', 5', 5". Die Blockverbohrung ist hierbei so weit optimiert, daß lediglich die für die Ventilreihen X, Y vorgesehenen Druckmittelkanäle 2' an den Seitenflächen des Aufnahmekörpers 1 verkugelt, d.h. mittels geeigneter Dichtstopfen zu verschließen sind. Hingegen sind die Druckmittelkanäle 3', 5' derart günstig gewählt, daß oben genannte Dichtstopfen entfallen. So ist beispielsweise der die Geräuschdämpfungskammer 6 mit dem Bremsdruckgeberanschluß THZ verbindende Druckmittelkanal 3' als gerade Sackbohrung durch den Bremsdruckgeberanschluß THZ hindurch radial bzw. tangential in die Geräuschdämpfungskammer 6 geführt. Analog dazu ist für jeden Bremskreis im Hydraulikaggregat der Pumpensaugkanal 5' und der an der zweiten Ventilreihe Y angeschlossene Rücklaufkanal 5" als Sackbohrung in die Niederdruckspeicherbohrung 5 eingebracht, die nach Aufnahme des Niederdruckspeicherkolbens und der Kolbenrückstellfeder mittels des Niederdruckspeicherdeckels verschlossen ist.

Durch die unmittelbare Anordnung der Pumpenbohrung 3 zwischen den Niederdruckspeicherbohrungen 5 und der zweiten Ventilreihe Y ergeben sich überdies besonders kurze totraumoptimierte Druckmittelwege zwischen den normalerweise geschlossenen Auslaßventilen der zweiten Ventilreihe Y über die Niederdruckspeicher 5 zur Pumpenbohrung 3, wodurch sich der zur Erstbefüllung des Hydraulikaggregats erforderliche Evakuier- und Befüllprozeß vereinfacht.

Die Fig. 1b zeigt zur Verdeutlichung des extrem kurzen Pumpensaugkanals 5' eine Schnittdarstellung durch den aus Fig. 1a bekannten Aufnahmekörper 1 auf Höhe der Pumpenbohrung 3. Gut zu erkennen sind hierbei die extrem kleinen Abstände der Pumpenbohrung 3 mit der darin integrierten Geräuschdämpfungskammern 6 gegenüber den beiderseits zur Pumpenbohrung 3 gelegenen Niederdruckspeicherbohrungen 5 und den Ventilaufnahmebohrungen 2 der zweiten Ventilreihe Y. Zur Ausbildung der Geräuschdämpfungskammern 6 an den äußeren Enden der Pumpenbohrung 3 bedarf es lediglich beiderends zweier Bohrungsstufen, die mittels eines Umfangsfräsers in Richtung der Niederdruckspeicherbohrungen 5 die Pumpensaugkanäle 5' herstellen. Ferner geht aus Fig. 1b ein sich an die Motoraufnahmebohrung 4 anschließender Leckagekanal 4' hervor, der den Aufnahmekörper 1 in Richtung des an der Unterseite des Hydraulikaggregats befindlichen Ventilsteuergeräts durchdringt, so daß das aus der Pumpenbohrung 3 in die Motoraufnahmebohrung 4 gelangende Leckagefluid im flüssigkeitsdichten Gehäuse des Ventilsteuergerätes aufgefangen und gespeichert werden kann.

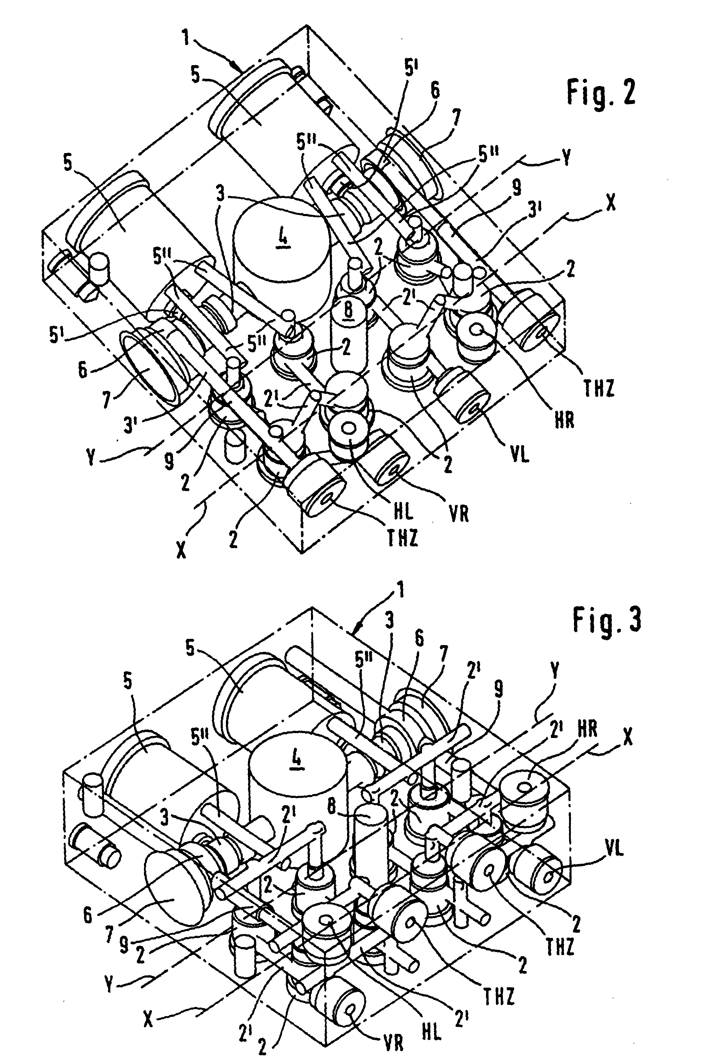

In der Fig. 2 wird abweichend von den vorangegangenen Ausführungsbeispielen nach den Fig. 1a und b eine Blockverbohrung vorgeschlagen, die unter Beibehaltung des zuvor geschilderten erfindungsgemäßen Grundaufbaus ohne die bereits geschilderte Verkugelung bzw. Anordnung eines gesonderten Kanalverschlusses für die Druckmittelkanäle 2' im Bereich der beiden Ventilreihen X, Y auskommt. Dies geschieht, indem die Druckmittelkanäle 2' der ersten Ventilreihe X paarweise für jeden Bremskreis von der Unterseite des abbildungsgemäßen Aufnahmekörpers 1 schräg durch die Ventilaufnahmebohrung 2 eingebracht werden, so daß sie unter einem spitzen Winkel im Aufnahmekörper 1 aufeinandertreffen und die damit geforderte Druckmittelverbindung zwischen jeweils einem Einlaßventilpaar pro Bremskreis in der ersten Ventilreihe X herstellen. Auch die aus der Figur. 1a bekannte Verkugelung der Druckmittelkanäle 2' der zweiten Ventilreihe Y läßt sich vermeiden, indem die Druckmittelkanäle 2' der zweiten Ventilreihe Y paarweise für jeden Bremskreis über die zugehörige Niederdruckspeicherbohrung 5 mit den Ventilaufnahmebohrungen 2 des entsprechenden Bremskreises verbunden werden, wozu in jede Niederdruckspeicherbohrung 5 zwei Rücklaufkanäle 5" zu den paarweise je Ventilreihe Y zusammengefaßten Ventilaufnahmebohrungen 2 eines vorzugsweise diagonal aufgeteilten Bremskreises unmittelbar geführt werden. Folglich hat sich die in Fig. 1a gezeigte, seitliche Blockverbohrung in Richtung der beiden Ventilreihen X, Y so weit verändert, daß die Druckmittelkanäle 2' der beiden Ventilreihen X, Y nicht mehr von außen zusätzlich verschlossen werden müssen.

Bei allen bisherigen Beispielen der Erfindung (Fig. 1a, 1b, 2) befindet sich in jedem den Bremsdruckgeberanschluß THZ mit der Geräuschdämpfungskammer 6 verbindenden Druckmittelkanal 3' ein Blendenkörper 9 zur Verbesserung der Geräuschdämpfung, der durch den Bremsdruckgeberanschluß THZ in den Druckmittelkanal 3' eingefügt ist. Der Blendenkörper 9 ist örtlich zwischen den beiden Ventilreihen X, Y in dem quer darüber sich erstreckendem Druckmittelkanal 3' derart positioniert, daß der Blendenkörper 9 keinerlei drosselnde Wirkung auf den stromaufwärts dazu vorhandenen Abzweig des Druckmittelkanals 3' ausübt, der zu den Einlaßventilen der ersten Ventilreihe X führt.

Hiervon abweichend wird in der Figur 3 der Blendenkörper 9 aus der entgegengesetzten Richtung jeweils in eine neben der Niederdruckspeicherbohrung 5 verlaufenden Verlängerung des Druckmittelkanals 3' eingeführt, was durch ein verändertes Anschlußbild für die Einmündungspunkte der Bremsdruckgeberanschlüsse THZ und Radbremsanschlüsse VR, VL, HR, HL in die zugehörigen Druckmittelkanäle 2', 3' erforderlich ist. Der Druckmittelkanal 3' ist infolge der nunmehr aus der Kanallängsachse versetzten Anordnung des Bremsdruckgeberanschlusses THZ jeweils von der die Niederdruckspeicherbohrung 5 aufweisenden Seitenfläche die Pumpen- bzw. Geräuschdämpfungskammer 3,6 durchquerend zur ersten Ventilreihe X geführt. Ansonsten entspricht die Blockverbohrung in allen wesentlichen Merkmalen den Ausführungsbeispielen der Erfindung nach den Figuren 1a, 1b.

### Bezugszeichenliste

- 1: Aufnahmekörper
- 2: Ventilaufnahmebohrung
- 2': Druckmittelkanal
- 3: Pumpenbohrung
- 3': Druckmittelkanal
- 4: Motoraufnahmebohrung
- 4': Leckagebohrung
- 5: Niederdruckspeicherbohrung
- 5': Pumpensaugkanal
- 5": Rücklaufkanal
- 6: Geräuschdämpfungskammer
- 7: Verschlußkörper
- 8: Durchgangsbohrung
- 9: Blendenkörper
- 10: Stufenabschnitt
- X: Erste Ventilreihe
- Y: Zweite Ventilreihe
- THZ: Bremsdruckgeberanschluß
- HL,HR, VR, VL: Radbremsanschluß

## Patentansprüche

1. Hydraulikaggregat für eine schlupfgeregelte Bremsanlage,
- mit einem Aufnahmekörper (1), der in mehreren Ventilaufnahmebohrungen (2) einer ersten und zweiten Ventilreihe (X, Y) Ein- und Auslaßventile aufnimmt,
- mit einer außerhalb zu den beiden Ventilreihen (X, Y) im Aufnahmekörper (1) angeordneten Pumpenbohrung (3), die quer zur Einmündungsrichtung der Ventilaufnahmebohrungen (2) in den Aufnahmekörper (1) gerichtet ist,
- mit einer außerhalb zu den beiden Ventilreihen (X, Y) im Aufnahmekörper (1) angeordneten Pumpenmotoraufnahmebohrung (4), die senkrecht auf die Pumpenbohrung (3) gerichtet ist,
- mit zwei außerhalb zu den beiden Ventilreihen (X, Y) in den Aufnahmekörper (1) einmündenden Niederdruckspeicherbohrungen (5), die neben der Pumpenbohrung (3) angeordnet sind und die senkrecht zu den Achsen der Ventilaufnahmebohrungen (2) und der Pumpenbohrung (3) in den Aufnahmekörper (1) einmünden,
- mit im Boden der Niederdruckspeicherbohrungen (5) eingefügte Aufnahmebohrungen für die Anordnung von Pumpensaugventilen,
- mit zwei an der Pumpenbohrung (3) angeschlossenen, hohlzylinderförmigen Geräuschdämpfungskammern (6), die mit zwei in den Aufnahmekörper (1) einmündenden Bremsdruckgeberanschlüssen (THZ) hydraulisch verbunden sind,
- mit mehreren die Ventilaufnahmebohrungen (2), Pumpen- und Niederdruckspeicherbohrungen (3, 5) verbindenden Druckmittelkanälen (2',3',5'), die eine hydraulische Verbindung zwischen den in den Aufnahmekörper (1) einmündenden Bremsdruckgeberanschlüssen (THZ) und den Radbremsanschlüssen (HL,HR,VR,VL) herzustellen vermögen, wobei eine hydraulische Verbindung der Bremsdruckgeberanschlüsse (THZ) mit den Geräuschdämpfungskammern (6) über radial oder tangential in die Pumpenbohrung (3) einmündende Druckmittelkanäle (3') erfolgt, die an den Ventilaufnahmebohrungen (2) der ersten, die Einlaßventile aufnehmenden Ventilreihe (X) angeschlossen sind, **dadurch gekennzeichnet, daß** die beiden Geräuschdämpfungskammern (6) in der Pumpenbohrung (3) integriert sind, und daß die Pumpenbohrung (3) einen Stufenabschnitt (10) aufweist, in den ein Pumpensaugkanal (5') einmündet, der durch das Einführen eines Umfangsfräsers in die Pumpenbohrung (3) hergestellt ist, wozu die Pumpenbohrungs wand durch den Umfangsfräser in Richtung der im Boden der Niederdruckspeicherbohrung (5) vorgesehenen Aufnahmebohrung abgetragen ist.

2. Hydraulikaggregat nach Anspruch 1, **dadurch gekennzeichnet, daß** die Geräuschdämpfungskammern (6) an den diametral gegenüber gelegenen Enden der Pumpenbohrung (3) angeordnet sind, und daß mittels von außen in die beiden Seitenflächen des Aufnahmekörpers (1) eingesetzte Verschlußkörper (7) gleichzeitig sowohl die Geräuschdämpfungskammern (6) als auch die Pumpenbohrung (3) druckmitteldicht verschlossen sind.

3. Hydraulikaggregat nach Anspruch 1 oder 2, **dadurch gekennzeichnet, daß** die Pumpenbohrung (3) beiderseits der Motoraufnahmebohrung (4) einen Achsenversatz aufweist.

4. Hydraulikaggregat nach Anspruch 1, **dadurch gekennzeichnet, daß** die zweite Ventilreihe (Y) ausschließlich die Ventilaufnahmebohrungen (2) für die Auslaßventile aufweist, die zwischen der Pumpenbohrung (3) und der ersten Ventilreihe (X), welche ausschließlich die Ventilaufnahmebohrungen (2) für die Einlaßventile aufnimmt, gelegen ist, so daß die zweite Ventilreihe (Y) unmittelbar neben der Pumpenbohrung (3) entlang verläuft.

5. Hydraulikaggregat nach Anspruch 1, **dadurch gekennzeichnet, daß** die Radbrems- und/oder die Bremsdruckgeberanschlüsse (HL, HR, VL, VR, THZ) zumindest teilweise parallel zur Motoraufnahmebohrung (4) angeordnet sind, wobei die Anschlüsse neben einem an der Oberseite des Aufnahmekörpers (1) aus der Motoraufnahmebohrung hervorstehenden Motorengehäuse in den Aufnahmekörper (3) einmünden.

6. Hydraulikaggregat nach Anspruch 5, **dadurch gekennzeichnet, daß** auf einer dem Motorengehäuse gegenüberliegenden Unterseite des Aufnahmekörpers(1) ein Ventilsteuergerät angebracht ist, das gleichzeitig die Steuerelektronik zum Antrieb eines im Motorengehäuse integrierten Elektromotors für eine Radialkolbenpumpe beinhaltet, wobei ein elektrischer Stecker des Elekromotors durch eine zwischen den beiden Ventilreihe X, Y gelegene Durchgangsbohrung 8 ragt und das Ventilsteuergerät kontaktiert.

## Claims

1. Hydraulic aggregate for a slip-controlled brake system,
- including an accommodating member (1) which receives inlet and outlet valves in several valve accommodating bores (2) of a first and second valve row (X, Y),
- including a pump bore (3) arranged outside the two valve rows (x, Y) in the accommodating member (1) and pointing transversely to the direction in which the valve accommodating bores (2) open into the accommodating member (1),
- including a pump motor accommodating bore (4) arranged outside the two valve rows (X, Y) in the accommodating member (1) and pointing vertically to the pump bore (3),
- including two low pressure accumulator bores (5) which open into the accommodating member (1) outside the two valve rows (X, Y), said bores being arranged beside the pump bore (3) and opening into the accommodating member (1) vertically to the axes of the valve accommodating bores (2) and the pump bore (3),
- including accommodating bores that are inserted in the bottom of the low pressure accumulator bores (5) for the arrangement of pump suction valves,
- including two hollow-cylindrical noise damping chambers (6) connected to the pump bore (3) and being in a hydraulic connection to two brake pressure generator ports (THZ) that open into the accommodating member (1),
- including several pressure fluid channels (2', 3', 5') that connect the valve accommodating bores (2), pump bores and low pressure accumulator bores (3, 5) and are adapted to provide a hydraulic connection between the brake pressure generator ports (THZ) that open into the accommodating member (1) and the wheel brake ports (HL, HR, VR, VL), wherein the brake pressure generator ports (THZ) have a hydraulic connection to the noise damping chambers (6) by way of pressure fluid channels (3') that open radially or tangentially into the pump bore (3), the said pressure fluid channels (3') being connected to the valve accommodating bores (2) of the first valve row (X) that accommodates the inlet valves,
**characterized in that** the two noise damping chambers (6) are integrated in the pump bore (3), and **in that** the pump bore (3) has a stepped portion (10) opening into which is a pump suction channel (5') that is made by introducing a periphery milling tool into the pump bore (3), for what purpose a layer of the pump bore wall is removed by the periphery milling tool in the direction of the accommodating bore provided in the bottom of the low pressure accumulator bore (5).

2. Hydraulic aggregate as claimed in claim 1,
**characterized in that** the noise damping chambers (6) are arranged at the diametrally opposite ends of the pump bore (3), and **in that** both the noise damping chambers (6) and the pump bore (3) are pressure-fluid tightly closed by means of closure members (7) inserted from outwards into the two lateral surfaces of the accommodating member (1).

3. Hydraulic aggregate as claimed in claim 1 or 2,
**characterized in that** the pump bore (3) has an axial offset on either side of the motor accommodating bore (4).

4. Hydraulic aggregate as claimed in claim 1,
**characterized in that** the second valve row (Y) comprises exclusively the valve accommodating bores (2) for the outlet valves being disposed between the pump bore (3) and the first valve row (X) that exclusively includes the valve accommodating bores (2) for the inlet valves, with the result that the second valve row (Y) extends directly alongside the pump bore (3).

5. Hydraulic aggregate as claimed in claim 1,
**characterized in that** the wheel brake ports and/or the brake pressure generator ports (HL, HR, VL, VR, THZ) are arranged at least partly in parallel to the motor accommodating bore (4), and the ports open into the accommodating member (1) beside a motor housing that projects from the motor accommodating bore at the top side of the accommodating member (1).

6. Hydraulic aggregate as claimed in claim 5,
**characterized in that** fitted on the bottom side of the accommodating member (1) opposite to the motor housing is a valve control device which additionally comprises the control electronics for driving an electric motor for a radial piston pump integrated in the motor housing, and an electric plug of the electric motor projects through a through-bore (8) disposed between the two valve rows (X, Y) and makes a contact with the valve control device.

## Revendications

1. Groupe hydraulique pour un système de freinage à régulation du glissement,
- comportant un corps de réception (1) qui reçoit dans plusieurs alésages de réception de soupape (2) d'une première et d'une deuxième rangées de soupapes (X, Y), des soupapes d'admission et des soupapes d'échappement,
- comportant un alésage de pompe (3) disposé dans le corps de réception (1) à l'extérieur par rapport aux deux rangées de soupapes (X, Y), qui est orienté dans le corps de réception (1), transversalement à la direction d'embouchure des alésages de réception de soupape (2),
- comportant un alésage de réception du moteur de pompe (4) disposé dans le corps de réception (1), à l'extérieur des deux rangées de soupapes (X, Y), qui est orienté perpendiculairement à l'alésage de la pompe (3),
- comportant deux alésages d'accumulateurs basse pression (5) débouchant dans le corps de réception (1), à l'extérieur des deux rangées de soupapes (X, Y), qui sont disposés à côté de l'alésage de pompe (3) et qui débouchent dans le corps de réception (1), perpendiculairement aux axes d'alésages de réception de soupape (2) et de l'alésage de pompe (3),
- comportant des alésages de réception insérés dans le fond des alésages d'accumulateur basse pression (5) pour la disposition de soupapes d'aspiration de la pompe,
- comportant deux chambres d'amortissement du bruit (6) de forme cylindrique creuse, raccordées à l'alésage de la pompe (3), qui sont reliées hydrauliquement à deux raccords de transducteur de pression de freinage (THZ) débouchant dans le corps de réception (1),
- comportant plusieurs canaux de fluide sous pression (2', 3', 5'), reliant les alésages de réception de soupape (2), les alésages de la pompe et alésages de l'accumulateur basse pression (3, 5), qui peuvent réaliser une liaison hydraulique entre les raccords des transducteurs de pression de freinage (THZ) débouchant dans le corps de réception (1) et les raccords des freins des roues (HL, HR, VR, VL), une liaison hydraulique des raccords des transducteurs de pression de freinage (THZ) avec les chambres d'amortissement du bruit (6) s'effectuant par des canaux de fluide sous pression (3') débouchant radialement ou tangentiellement dans l'alésage de pompe (3), lesquels canaux sont raccordés aux alésages de réception de soupape (2) de la première rangée de soupapes (X) recevant les soupapes d'admission, **caractérisé en ce que** les deux chambres d'amortissement du bruit (6) sont intégrées dans l'alésage de pompe (3), et **en ce que** l'alésage de pompe (3) comporte une partie étagée (10) dans laquelle débouche un canal d'aspiration de la pompe (5'), qui est réalisé par l'introduction d'une fraise tangentielle dans l'alésage de pompe (3), ce qui fait que la paroi de l'alésage de pompe est enlevée par la fraise tangentielle en direction de l'alésage de réception prévu dans le fond de l'alésage d'accumulateur basse pression (5).

2. Groupe hydraulique selon la revendication 1, **caractérisé en ce que** les chambres d'amortissement du bruit (6) sont disposées aux extrémités diamétralement opposées de l'alésage de pompe (3), et **en ce que** les chambres d'amortissement du bruit (6) ainsi que l'alésage de pompe (3) sont fermés simultanément de manière étanche aux fluides sous pression, au moyen de corps de fermeture (7) insérés de l'extérieur dans les deux surfaces latérales du corps de réception (1).

3. Groupe hydraulique selon la revendication 1 ou 2, **caractérisé en ce que** l'alésage de pompe (3) présente un décalage axial des deux côtés de l'alésage de réception du moteur (4).

4. Groupe hydraulique selon la revendication 1, **caractérisé en ce que** la deuxième rangée de soupapes (Y) comporte exclusivement les alésages de réception de soupape (2) pour les soupapes d'échappement, qui est située entre l'alésage de pompe (3) et la première rangée de soupapes (X) qui reçoit exclusivement les alésages de réception de soupape (2) pour les soupapes d'admission, ce qui fait que la deuxième rangée de soupapes (Y) s'étend directement à côté et le long de l'alésage de pompe (3).

5. Groupe hydraulique selon la revendication 1, **caractérisé en ce que** les raccords des freins des roues et/ou des transducteurs de pression de freinage (HL, HR, VL, VR, THZ) sont disposés au moins en partie parallèlement à l'alésage de réception du moteur (4), les raccords débouchant dans le corps de réception (3), à côté d'un carter moteur dépassant de l'alésage de réception du moteur, sur le côté supérieur du corps de réception (1).

6. Groupe hydraulique selon la revendication 5, **caractérisé en ce que** sur un côté inférieur, opposé au carter moteur, du corps de réception (1), est fixé un appareil de commande de soupape qui contient en même temps l'électronique de commande pour l'entraînement d'un moteur électrique intégré au carter moteur, pour une pompe à piston radial, un connecteur électrique du moteur électrique passant à travers un alésage de passage (8) situé entre les deux rangées de soupapes (X, Y), et étant en contact avec l'appareil de commande de soupape.
